# FASCICULE DE BREVET EUROPEEN

(11) **EP 2 676 309 B1**
(45) Date de publication et mention de la délivrance du brevet: **16.05.2018**
(21) Numéro de dépôt: 12703532.7
(22) Date de dépôt: 10.02.2012
(51) Int. Cl.: H01M 2/36, H01G 9/10, H01G 11/80

(54) **PROCEDE D'OBTURATION D'UN ORIFICE D'IMPREGNATION D'UN ENSEMBLE DE STOCKAGE D'ENERGIE**
VERFAHREN ZUM ABDICHTEN EINER IMPRÄGNIERUNGSÖFFNUNG EINER ENERGIESPEICHERANORDNUNG
METHOD FOR SEALING AN IMPREGNATION OPENING OF AN ENERGY STORAGE ASSEMBLY

(30) Priorité: 18.02.2011 FR 1151352
(43) Date de publication de la demande: 25.12.2013
(73) Titulaire: Blue Solutions, 29500 Ergué Gabéric (FR)
(72) Inventeur: VIGNERAS, Erwan, F-29000 Quimper (FR)
(74) Mandataire: Regimbeau
(86) Numéro de dépôt international: PCT/EP2012/052263
(87) Numéro de publication internationale: WO 2012/110408

(56) Documents cités:
- EP-A2- 0 817 289
- GB-A- 1 329 783
- JP-A- 2003 077 428
- JP-A- 2003 197 179
- US-A- 5 150 745

## Description

### DOMAINE TECHNIQUE

La présente invention concerne le domaine technique des ensembles de stockage d'énergie électrique.

Plus particulièrement, la présente invention concerne un procédé pour la fabrication de tels ensembles de stockages.

On entend, dans le cadre de la présente invention, par « ensemble de stockage d'énergie électrique », soit un condensateur (i.e. un système passif comprenant des électrodes et un isolant), soit un supercondensateur (i.e. un système passif comprenant au moins deux électrodes, un électrolyte et au moins un séparateur), soit une batterie (i.e. un système comprenant une anode, une cathode et une solution d'électrolyte entre l'anode et la cathode), par exemple de type batterie au lithium.

### ETAT DE LA TECHNIQUE

On connaît dans l'état de la technique des supercondensateurs comprenant un boîtier muni d'un logement pour recevoir deux électrodes séparées par un séparateur électriquement isolant. Le boîtier est formé d'un tube muni d'un fond, ensuite coiffé par un couvercle. Le boîtier, soit le tube et/ou le couvercle, comprend un (ou plusieurs) orifice(s) d'imprégnation pour le remplissage du logement avec un électrolyte.

Une fois l'électrolyte introduit dans le logement, l'orifice d'imprégnation est obturé pour rendre le boîtier étanche aux poussières, à l'eau, etc.

Dans l'état de la technique, on obture généralement l'orifice d'imprégnation à l'aide d'un rivet, sous lequel est placé un joint d'étanchéité ou à l'aide d'une pièce réalisée en un matériau élastomère encliquetée sur le boîtier, dans l'orifice d'imprégnation.

Les procédés de l'état de la technique imposent donc l'utilisation d'une ou plusieurs pièces dédiées uniquement à l'obturation de l'orifice d'imprégnation.

En outre, un inconvénient lié à l'utilisation d'un joint ou d'une pièce élastomère pour rendre le boîtier étanche est que ceux-ci peuvent devenir poreux avec le temps, dégradant ainsi la durée de vie du supercondensateur. Par ailleurs, la taille et le centrage des orifices d'imprégnation destinés à recevoir les rivets ou les pièces élastomères doivent être contrôlés, ce qui rend l'obturation de ces orifices assez difficile à mettre en oeuvre industriellement.

Un tel procédé d'obturation de l'orifice d'imprégnation est par conséquent relativement onéreux.

On connaît également d'après le document JP 2003-197179 un procédé d'obturation d'un orifice ménagé dans un ensemble de stockage d'énergie. Ce procédé consiste à insérer la pointe d'un outil entraînée en rotation dans cet orifice, puis après fusion du matériau constituant cet outil avec les parois de l'orifice, à couper la pointe de l'outil qui reste alors dans l'orifice en obturant celui-ci.

Un tel procédé nécessite donc l'emploi de matière consommable.

On connaît enfin d'après le document JP 2003-77428, un autre procédé d'obturation d'un orifice ménagé dans un ensemble de stockage d'énergie. Ce procédé utilise un outil de plus grandes dimensions que le diamètre de l'orifice à obturer et ne permet donc d'obturer que la partie extérieure de cet orifice.

Un but de l'invention est donc de mettre au point un procédé d'obturation de l'orifice d'imprégnation simple et de fabrication peu coûteuse.

### RESUME DE L'INVENTION

A cet effet, l'invention a pour objet un procédé d'obturation d'un orifice d'imprégnation d'un ensemble de stockage d'énergie, l'ensemble comprenant un boîtier contenant au moins deux électrodes, l'orifice étant ménagé dans une des parois du boîtier et présentant une embouchure extérieure située côté extérieur du boîtier et une embouchure intérieure située côté intérieur du boîtier, le procédé comprenant :
- une étape d'insertion dans l'orifice par l'embouchure extérieure d'au moins une partie extrême d'une tête d'un outil entraîné en rotation selon une direction correspondant essentiellement à une direction axiale de l'orifice, pour échauffer une zone du boîtier au voisinage de l'orifice, la tête comprenant au moins une première section à sa base et une deuxième section à son extrémité, de dimensions inférieures à celles de la première section.
- une fois la zone du boîtier échauffée, une étape de translation de l'outil en direction de l'embouchure intérieure, pour entraîner un déplacement de la matière en direction de l'embouchure intérieure et obturer l'orifice par recollement de la matière.

La matière déplacée est la matière du boîtier, formant les parois de l'orifice avant mise en oeuvre du procédé. La fermeture de l'orifice d'obturation peut ainsi être effectuée sans apport de matière.

L'obturation de l'orifice est effectuée en rendant la matière située au voisinage de l'orifice pâteuse puis en la poussant vers l'embouchure intérieure de l'orifice afin de parvenir à son recollement à cet endroit. La matière du boîtier ainsi traitée permet donc seule de parvenir à l'obturation de l'orifice.

Ainsi, il n'est pas nécessaire d'utiliser des pièces supplémentaires pour obturer l'orifice d'imprégnation. En outre, le dispositif utilisé pour effectuer l'obturation de l'orifice d'imprégnation est de conception très simple et nécessite peu de maintenance. Il est donc très économique. De plus, l'obturation de l'orifice d'imprégnation peut être effectuée avec le procédé selon l'invention en un temps très court (de l'ordre de quelques secondes), en utilisant une énergie limitée et donc avec un meilleur rendement.

Il n'est pas non plus nécessaire de préparer préalablement la surface de l'orifice comme avant un procédé de soudure ou de collage classique. De plus, le procédé ne nécessite pas l'utilisation de consommable puisque l'obturation est effectuée à l'aide de la matière constituant le boîtier. Il est également peu polluant et ne dégage notamment pas de fumées.

Le procédé selon l'invention permet donc de fermer l'orifice d'imprégnation à l'aide d'un procédé simple et peu onéreux.

On notera qu'il est possible de mettre en oeuvre le procédé selon l'invention sans risquer de détériorer le supercondensateur. En effet, réchauffement du boîtier est réduit car le recollement est effectué quand le matériau est à l'état pâteux. Cela autorise une obturation de l'orifice d'imprégnation sans endommager les électrodes, très proches de celui-ci.

En outre, la zone thermiquement affectée du boîtier étant très faible, le procédé n'entraîne pas de dégradation de la tenue mécanique du boîtier. La conductivité électrique du supercondensateur n'est pas non plus perturbée par un tel procédé car il n'y a pas de matériau apporté en supplément de celui constituant le boîtier.

Des aspects préférés mais non limitatifs du procédé selon l'invention sont les suivants :
- une fois que l'outil a été translaté jusqu'à une position prédéterminée, le procédé comprend une étape lors de laquelle l'outil continue à être entraîné en rotation. Lors de cette étape, la matière échauffée est malaxée pour assurer un meilleur recollement de celle-ci au niveau de l'embouchure intérieure de l'orifice,
- la tête de l'outil comprend une pointe. En d'autres termes, la section d'au moins une partie de la tête de l'outil varie continûment,
- la pointe est dimensionnée de sorte qu'au moins une section de l'orifice est inférieure à la section de la pointe à sa base mais supérieure à la section de la pointe à son extrémité, correspondant notamment à l'extrémité de l'outil. Cela permet en effet un échauffement de la matière sur tout le pourtour de l'orifice sans qu'il soit nécessaire de générer un mouvement de l'outil perpendiculairement à la direction de son axe de rotation,
- la pointe est de forme de révolution pour un échauffement plus homogène de la matière. L'outil dans son ensemble peut également présenter une forme de révolution,
- la pointe présente une forme tronconique,
- la tête de l'outil peut également comprendre un épaulement périphérique s'étendant dans un plan essentiellement perpendiculaire à l'axe de rotation,
- l'orifice d'imprégnation ayant une section de dimension variable, la section de la tête au niveau de l'épaulement est choisie pour être comprise entre les plus petite et plus grande sections de l'orifice. Cela permet également d'éviter des mouvements supplémentaires de l'outil,
- l'outil peut présenter un pion à l'extrémité de la tête,
- l'outil est réalisé en métal tel que l'acier, par exemple l'acier de type rapide, un tel matériau résistant à la chaleur et étant suffisamment dur pour limiter l'usure de l'outil,
- lors du procédé, l'outil est entraîné en rotation à une vitesse comprise entre 600 et 2000 tours/minute, de préférence entre 800 et 1200 tours/minute, cette vitesse étant adaptée à la nature du matériau à échauffer, à savoir l'aluminium pour la plupart des boîtiers,
- la position prédéterminée et/ou la durée des différentes étapes sont déterminées par des moyens de contrôle des efforts et/ou de position et/ou de température, par exemple intégrés à l'outil, ce qui permet de garantir une qualité constante de l'obturation et ce malgré les variations liées à l'industrialisation du procédé, par exemple la dispersion des dimensions des boîtiers,
- le procédé comprend une étape lors de laquelle, la tête de l'outil étant amovible relativement à un corps de l'outil, on retire le corps de l'outil du boîtier tandis que la tête reste en place sur le boîtier. La tête restera ensuite en place de façon permanente sur l'ensemble de stockage d'énergie. Elle est de forme exactement complémentaire de celle du boîtier puisque la matière du boîtier a été mise en forme par cette tête. Elle est donc maintenue par coopération de forme sur le boîtier. Le maintien de cette tête sur le boîtier permet d'apporter une sécurité supplémentaire concernant l'obturation de l'orifice d'imprégnation et de diminuer le taux de rebut qui pourrait être engendré par ce procédé, même si ce mode de réalisation est plus coûteux. Dans ce mode de réalisation, la présence du bouchon n'interdit pas le recollement de la matière du boîtier formant initialement les parois de l'orifice,
- le procédé comprend une étape lors de laquelle on retire l'outil du boîtier-par exemple préalablement au refroidissement et au durcissement de la matière-de sorte que la tête de l'outil ne soit pas en contact avec le boîtier. Lors de cette étape de retrait, l'outil, notamment la tête de celui-ci, peut toujours être entraînée en rotation. Cela évite qu'elle puisse adhérer à l'ensemble (du fait du refroidissement de la matière formant le boîtier). Ce n'est toutefois pas obligatoire puisque, si le retrait est effectué suffisamment rapidement, l'outil peut de toute façon être facilement retiré de l'ensemble sans adhérer à ce dernier. L'outil est ainsi entièrement réutilisable ce qui permet d'économiser encore des coûts de fabrication,
- le boîtier comprend au moins un tube, éventuellement muni d'un fond, et au moins un couvercle, l'orifice d'imprégnation étant ménagé dans le tube ou le couvercle.

L'invention a également pour objet un procédé d'obturation d'orifices d'imprégnation d'une pluralité d'ensemble de stockage d'énergie, chaque ensemble comprenant un boîtier contenant au moins deux électrodes, et un orifice d'obturation ménagé dans une des parois du boîtier et présentant une embouchure extérieure située côté extérieur du boîtier et une embouchure intérieure située côté intérieur du boîtier, le procédé comprenant :
- une étape d'insertion dans l'orifice d'un premier ensemble par l'embouchure extérieure d'au moins une partie extrême d'une tête d'un outil entraîné en rotation selon une direction correspondant essentiellement à une direction axiale de l'orifice, pour échauffer une zone du boîtier au voisinage de l'orifice, la tête comprenant au moins une première section à sa base et une deuxième section à son extrémité, de dimensions inférieures à celles de la première section.
- une fois la zone du boîtier échauffée, une étape de translation de l'outil en direction de l'embouchure intérieure, pour entraîner un déplacement de la matière du boîtier formant initialement les parois de l'orifice en direction de l'embouchure intérieure et obturer l'orifice par recollement de ladite matière du boîtier,
les étapes d'insertion et de translation de l'outil étant répétée au moins une fois afin d'obturer l'orifice d'imprégnation d'au moins un autre ensemble de stockage d'énergie

### BREVE DESCRIPTION DES FIGURES

D'autres caractéristiques, buts et avantages de la présente invention ressortiront encore de la description qui suit, laquelle est purement illustrative et non limitative et doit être lue au regard des dessins annexés sur lesquels :
- la figure 1 est une vue en coupe schématique d'un supercondensateur pour lequel le procédé selon l'invention est mis en oeuvre,
- la figure 2 est une représentation schématique en coupe d'un outil à l'aide duquel le procédé selon un mode de réalisation de l'invention est mis en oeuvre,
- les figures 3A à 3D représentent un détail A du supercondensateur de la figure 1 lors de différentes étapes d'un procédé d'obturation d'un trou d'imprégnation d'un supercondensateur selon un mode de réalisation de l'invention.

### DESCRIPTION DETAILLEE DE L'INVENTION

On va maintenant décrire plus en détail un procédé d'obturation d'un trou d'imprégnation d'un supercondensateur selon un mode de réalisation de l'invention.

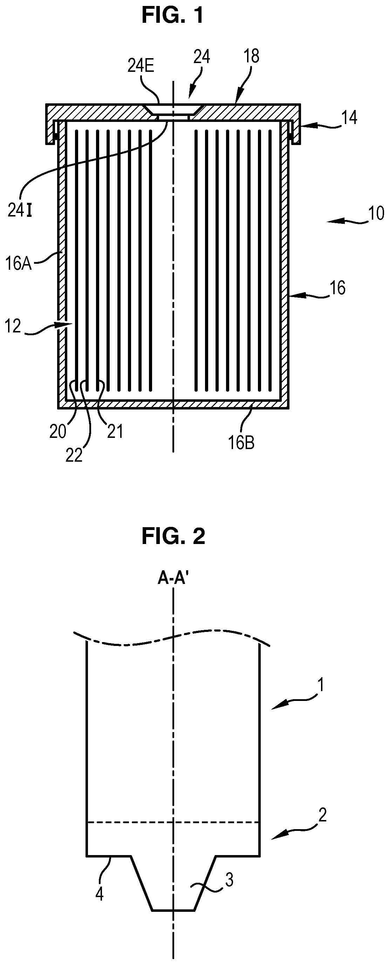

En référence à la figure 1, on a illustré un exemple de réalisation d'un supercondensateur pour lequel on met en oeuvre le procédé selon l'invention.

Le supercondensateur 10 comprend un enroulement 12 mis en place dans un boîtier 14 constitué dans le mode de réalisation décrit d'un tube 16, comprenant une paroi latérale cylindrique 16A et un fond 16B, et d'un couvercle 18 coiffant le tube 16 pour fermer celui-ci. Le tube 16 et le couvercle 18 sont soudés sur toute leur périphérie de façon à assurer l'étanchéité du supercondensateur. Le tube 16 et le couvercle sont généralement réalisés en aluminium.

L'enroulement 12 est constitué d'une unité comprenant deux feuilles d'électrode 20, 21 et un séparateur isolant 22 superposés, le séparateur étant interposé entre les deux feuilles d'électrode 20, 21.

Chaque feuille d'électrode comprend un collecteur et une électrode constituée par un matériau actif, à base notamment de charbon actif, et déposée sur les deux faces opposées du collecteur.

Le couvercle 18 comprend un orifice d'imprégnation 24 traversant, agencé en son centre. Un tel orifice permet d'injecter un électrolyte, indispensable au fonctionnement du supercondensateur à l'intérieur du boîtier. Cet orifice d'imprégnation est destiné à être obturé. Il présente une embouchure extérieure 24E débouchant côté extérieur du boîtier et une embouchure intérieure 24l, débouchant côté intérieur du boîtier.

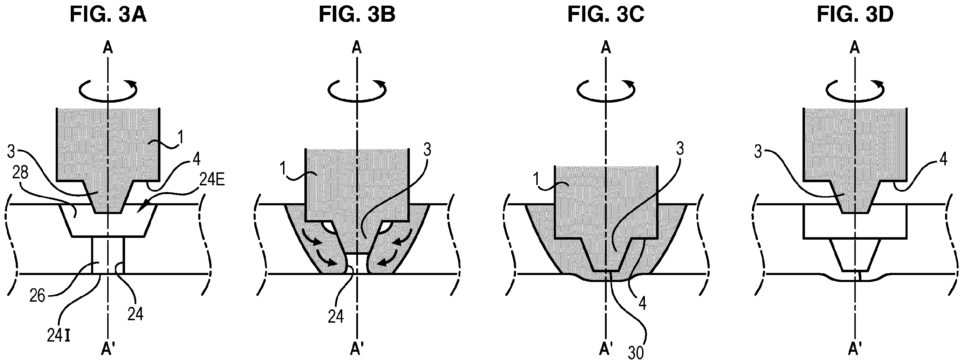

Comme on le voit mieux sur les figures 3, l'orifice présente une forme en entonnoir s'évasant au niveau de son embouchure extérieure 24E. Il comprend en fait une première partie 26 de section constante, comprenant l'embouchure intérieure 24l, et une deuxième partie 28 de section évasée, débouchant sur la première partie 26, au niveau de sa petite section, et, comprenant l'embouchure extérieure 24E à son autre extrémité, au niveau de sa grande section.

Pour garantir l'étanchéité du supercondensateur, il faut, une fois l'électrolyte injecté, obturer le trou d'imprégnation. C'est ce procédé que l'on va détailler dans la suite de la description.

On va tout d'abord décrire un outil permettant de mettre en oeuvre le procédé selon un mode de réalisation de l'invention.

L'outil comprend un corps de forme cylindrique 1 s'étendant le long d'un axe de révolution A-A'. Le matériau constituant le corps 1 est par exemple de l'acier ou tout type de matériau de dureté supérieure à celle du boîtier, à savoir l'aluminium dans l'exemple décrit ici.

L'outil comprend également une tête 2 s'étendant à l'une des extrémités axiales du corps 1. La tête comporte une pointe 3 de forme tronconique ainsi qu'un épaulement 4 périphérique s'étendant dans un plan sensiblement perpendiculaire à l'axe de révolution A-A' du corps 1.

Le corps 1 et la tête de l'outil sont adaptés pour être entrainés en rotation autour d'un axe de rotation correspondant à l'axe de révolution A-A' du corps 1. L'outil comprend également au moins un degré de liberté lui permettant d'effectuer une translation selon la direction de son axe de rotation.

L'outil comprend un moteur (non représenté) pour entraîner en rotation le corps et la tête du dispositif. Le moteur est par exemple apte à faire tourner le corps et la tête du dispositif à une vitesse comprise entre 600 et 2000 tours/minute, et préférentiellement égale à 1000 tours/minute.

Avantageusement, il peut comprendre des moyens repère de positionnement pour contrôler la pénétration du corps et de la tête dans le boîtier. Il peut aussi comprendre des moyens de mesure d'effort pour contrôler la force appliquée par l'outil tournant à la matière du boîtier et/ou des moyens de mesure de la température pour déterminer la température atteinte par la matière du boîtier.

On va maintenant décrire plus en détail le procédé d'obturation de l'orifice d'imprégnation 24 en référence aux figures 3A à 3D.

Lors d'une première étape du procédé représentée à la figure 3A, le corps 1 et la tête 2 de l'outil sont entrainés en rotation par le moteur, relativement à l'axe A-A'. La tête est positionnée au dessus de l'orifice d'imprégnation 24.

Le corps 1 du dispositif est ensuite déplacé en translation le long de son axe de rotation A-A' de façon à insérer la tête, notamment la pointe 3, dans le trou d'imprégnation 24, par l'embouchure extérieure 24E. Comme on le voit sur la figure 3B, la pointe est dimensionnée de sorte la section de l'extrémité de la pointe est inférieure à la section de la première partie du trou alors que la section de la base de la pointe est supérieure à la section de la première partie. De même, l'outil est dimensionné de sorte que l'épaulement 4 entre en contact avec la deuxième partie, évasée, de l'orifice 24

La pointe 3 et l'épaulement 4 de l'outil sont alors en contact avec tout le pourtour de l'orifice.

Une fois cette configuration atteinte, les frottements entre une zone du couvercle 18 située au voisinage de l'orifice 24 et la tête (aux niveaux de la pointe tronconique et de l'épaulement) échauffent la matière de la pièce à une température d'environ 450 °C. La matière passe alors d'un état solide à un état pâteux.

Lorsque la matière atteint cet état, on translate l'outil vers l'embouchure intérieure 24l du trou d'imprégnation, jusqu'à une position prédéterminée représentée à la figure 3C.

La position prédéterminée est notamment déterminée à l'aide des moyens repère de positionnement de l'outil.

Lors de cette étape, la matière est repoussée au fond de l'orifice d'imprégnation 24, vers l'embouchure intérieure 24l, comme le montrent les flèches de la figure 3B, sous l'action de la translation des surfaces de l'épaulement et de la pointe entraînant également le mouvement de la matière pâteuse dans cette direction. La matière formant auparavant les parois du trou d'imprégnation se recolle donc en partie inférieure de l'orifice, au niveau de la ligne de recollement 30, située au voisinage de l'embouchure intérieure 24l. La forme en pointe de l'outil favorise l'obturation du trou.

Une fois dans la configuration représentée à la figure 3C, le procédé comprend une étape lors de laquelle l'entraînement en rotation de l'outil continue tandis que l'outil est maintenu dans la position prédéterminée. Cela permet de malaxer la matière du couvercle pour assurer une meilleure cohésion de la matière au niveau du recollement.

Ensuite, l'outil est retiré du boîtier et n'est alors plus en contact avec la matière du boîtier. La matière refroidit donc et durcit dans la configuration représentée à la figure 3D. Le trou d'imprégnation est alors obturé. L'étape de retrait de l'outil peut être effectuée en continuant la rotation de l'outil.

Suite au retrait de l'outil, il peut obturer un orifice d'imprégnation d'autres ensembles, cet outil n'ayant pas subi de modification lors de l'obturation de l'orifice de l'ensemble.

L'homme du métier aura compris que de nombreuses modifications peuvent être apportées au procédé décrit ci-dessus sans sortir matériellement des nouveaux enseignements présentés ici. Il est donc bien évident que les exemples qui viennent d'être donnés ne sont que des illustrations particulières en aucun cas limitatives. A titre d'exemple, l'invention peut comprendre les variantes suivantes.

La forme de l'orifice d'imprégnation n'est pas limitée à ce qui a été décrit ci-dessus. L'orifice d'imprégnation peut par exemple être configuré avec une section constante. Le boîtier peut également comprendre un tube sans fond muni de deux couvercles à chacune de ses extrémités. L'ensemble peut également comprendre plus d'un orifice d'imprégnation et/ou un orifice d'imprégnation ménagé sur le tube.

On peut également envisager que le boîtier soit parallélépipédique et que les feuilles d'électrodes et le séparateur ne soient pas enroulés mais simplement empilés.

L'outil peut également présenter une forme différente que celle qui a été décrite. Il peut par exemple comprendre un épaulement et un élément de dimensions inférieures à son extrémité, l'élément étant de forme cylindrique ou rectangulaire. Il pourrait également ne pas présenter d'épaulement mais seulement un élément en pointe à son extrémité.

On peut également envisager que l'outil ne soit pas forcément dimensionné de sorte que la section de la base de sa tête soit plus importante qu'au moins une section du trou. Dans ce cas, le procédé comprend une étape supplémentaire de translation, par exemple de translation rotative, de l'outil dans un plan de normale essentiellement parallèle à l'axe de rotation de l'outil.

La vitesse de l'outil peut également être différente de ce qui a décrit ou variable. Les matériaux du boîtier et/ou de l'outil peuvent également différer de ce qui a été décrit.

On peut également envisager que la tête de l'outil soit amovible et qu'on la détache du corps de l'outil avant de retirer celui-ci du boîtier. La forme de la tête est alors exactement complémentaire de celle du boîtier. Elle reste donc en place sur celui-ci et fait office de bouchon.

On notera également que l'étape de rotation de l'outil suite à sa translation est optionnelle.

## Revendications

1. Procédé d'obturation d'un orifice d'imprégnation d'un ensemble de stockage d'énergie, l'ensemble comprenant un boîtier (14) contenant au moins deux électrodes, l'orifice (24) étant ménagé dans une des parois du boîtier et présentant une embouchure extérieure (24E), située côté extérieur du boîtier, et une embouchure intérieure (24I), située côté intérieur du boîtier, le procédé comprenant :
- une étape d'insertion dans l'orifice (24) par l'embouchure extérieure (24E) d'au moins une partie extrême d'une tête (2) d'un outil entraîné en rotation, selon une direction (A-A') correspondant essentiellement à une direction axiale de l'orifice (24), de façon à échauffer une zone du boîtier au voisinage de l'orifice, la tête de l'outil comprenant une pointe (3) avec au moins une première section à sa base et une deuxième section à son extrémité, de dimensions inférieures à celles de la première section, la pointe (3) étant dimensionnée de sorte qu'au moins une section de l'orifice (24I) est inférieure à une section de la pointe à sa base mais supérieure à la section de la pointe à son extrémité,
- **caractérisé en ce qu'**une fois la zone échauffée, une étape de translation de l'outil en direction de l'embouchure intérieure (24l), pour entraîner un déplacement de la matière du boîtier formant initialement les parois de l'orifice, en direction de l'embouchure intérieure, de sorte que ladite matière formant auparavant les parois du trou d'imprégnation se recolle en partie inférieure de l'orifice (24) au niveau de la ligne de recollement (30) située au voisinage de l'embouchure intérieure (24l), de façon à obturer l'orifice (24), sans apport de matière.

2. Procédé selon la revendication précédente, comprenant une étape lors de laquelle l'outil continue à être entraîné en rotation, une fois que l'outil a été translaté jusqu'à une position prédéterminée.

3. Procédé selon l'une quelconque des revendications précédentes, dans lequel la pointe (3) de la tête (2) de l'outil est de forme tronconique.

4. Procédé selon l'une quelconque des revendications précédentes, dans lequel la tête (2) présente un épaulement périphérique (4) s'étendant dans un plan essentiellement perpendiculaire à l'axe de rotation (A-A') de l'outil.

5. Procédé selon la revendication précédente, dans lequel, l'orifice d'imprégnation (24) ayant une section de dimension variable, la section de la tête (2) au niveau de l'épaulement (4) est choisie pour être comprise entre les plus petite et plus grande sections de l'orifice.

6. Procédé selon l'une quelconque des revendications précédentes, lors duquel la tête (2) est entraînée en rotation à une vitesse comprise entre 600 et 2000 tours/minute, de préférence entre 800 et 1200 tours/minute.

7. Procédé selon l'une quelconque des revendications précédentes, dans lequel la position prédéterminée et/ou la durée des étapes sont déterminées par des moyens de contrôle des efforts et/ou de position, par exemple intégrés à l'outil.

8. Procédé selon l'une quelconque des revendications précédentes, comprenant une étape lors de laquelle on retire l'outil du boîtier préalablement au refroidissement et au durcissement de la matière.

9. Procédé selon l'une quelconque des revendications précédente comprenant une étape lors de laquelle on retire l'outil du boîtier de sorte que la tête de l'outil ne soit plus en contact avec le boîtier.

10. Procédé selon l'une des deux revendications précédentes, dans lequel l'étape de retrait de l'outil est effectuée en continuant la rotation de l'outil.

11. Procédé selon l'une quelconque des revendications précédentes, dans lequel le boîtier (14) comprend un tube (16), éventuellement muni d'un fond (16B), et au moins un couvercle (18), l'orifice d'imprégnation (24) étant situé sur le couvercle (18), ou sur le tube (16), notamment sa paroi de fond (16B).

## Patentansprüche

1. Verfahren zum Abdichten einer Imprägnierungsöffnung einer Energiespeicheranordnung, wobei die Anordnung ein Gehäuse (14) umfasst, das mindestens zwei Elektroden enthält, wobei die Öffnung (24) in einer der Wände des Gehäuses ausgebildet ist und eine äußere Ausmündung (24E), die sich an der Außenseite des Gehäuses befindet, und eine innere Ausmündung (24I), die sich an der Innenseite des Gehäuses befindet, aufweist, wobei das Verfahren umfasst:
- einen Einsetzschritt in die Öffnung (24) durch die äußere Ausmündung (24E) mindestens eines Endteils eines Kopfs (2) eines rotierend angetriebenen Werkzeugs gemäß einer Richtung (A-A'), die im Wesentlichen einer axialen Richtung der Öffnung (24) entspricht, derart, dass ein Bereich des Gehäuses in der Nähe der Öffnung erwärmt wird, wobei der Kopf des Werkzeugs eine Spitze (3) mit mindestens einem ersten Querschnitt an ihrer Basis und einem zweiten Querschnitt an ihrem Ende kleinerer Abmessungen als die des ersten Querschnitts umfasst, wobei die Spitze (3) derart bemessen ist, dass mindestens ein Querschnitt der Öffnung (24I) kleiner als ein Querschnitt der Spitze an ihrer Basis, aber größer als der Querschnitt der Spitze an ihrem Ende, ist,
- **dadurch gekennzeichnet, dass**, sobald der Bereich erwärmt ist, ein Verlagerungsschritt des Werkzeugs in Richtung der inneren Ausmündung (24I), um eine Verlagerung des Materials des Gehäuses, das ursprünglich die Wände der Öffnung bildet, in Richtung der inneren Ausmündung derart zu bewirken, dass das Material, das zuvor die Wände der Imprägnierungsöffnung bildete, sich am unteren Teil der Öffnung (24) im Bereich der Anlagerungslinie (30), die sich in der Nähe der inneren Ausmündung (24I) befindet, derart anlagert, dass die Öffnung (24) ohne Materialzufuhr verschlossen wird.

2. Verfahren nach vorangehendem Anspruch, umfassend einen Schritt, bei dem das Werkzeug weiterhin rotierend angetrieben wird, sobald das Werkzeug bis zu einer vorbestimmten Position verlagert wurde.

3. Verfahren nach einem der vorangehenden Ansprüche, wobei die Spitze (3) des Kopfs (2) des Werkzeugs kegelstumpfförmig ist.

4. Verfahren nach einem der vorangehenden Ansprüche, wobei der Kopf (2) einen peripheren Absatz (4) aufweist, der sich in einer Ebene erstreckt, die im Wesentlichen senkrecht zur Rotationsachse (A-A') des Werkzeugs ist.

5. Verfahren nach vorangehendem Anspruch, wobei, wobei die Imprägnierungsöffnung (24) einen Querschnitt mit variabler Abmessung hat, der Querschnitt des Kopfs (2) im Bereich des Absatzes (4) ausgewählt ist, um zwischen dem kleinsten und dem größten Querschnitt der Öffnung inbegriffen zu sein.

6. Verfahren nach einem der vorangehenden Ansprüche, bei dem der Kopf (2) mit einer Geschwindigkeit zwischen 600 und 2000 Umdrehungen/Minute, vorzugsweise zwischen 800 und 1200 Umdrehungen/Minute, rotierend angetrieben wird.

7. Verfahren nach einem der vorangehenden Ansprüche, wobei die vorbestimmte Position und/oder die Dauer der Schritte von Steuermitteln der Kräfte und/oder der Position bestimmt werden, die beispielsweise in dem Werkzeug integriert sind.

8. Verfahren nach einem der vorangehenden Ansprüche, umfassend einen Schritt, bei dem das Werkzeug vor der Abkühlung und der Härtung des Materials aus dem Gehäuse entfernt wird.

9. Verfahren nach einem der vorangehenden Ansprüche, umfassend einen Schritt, bei dem das Werkzeug derart aus dem Gehäuse entfernt wird, dass der Kopf des Werkzeugs nicht mehr mit dem Gehäuse im Kontakt ist.

10. Verfahren nach einem der zwei vorangehenden Ansprüche, wobei der Schritt des Entfernens des Werkzeugs bei Fortsetzung der Rotation des Werkzeugs durchgeführt wird.

11. Verfahren nach einem der vorangehenden Ansprüche, wobei das Gehäuse (14) ein Rohr (16) umfasst, das eventuell mit einem Boden (16B) ausgestattet ist, und mindestens einen Deckel (18), wobei sich die Imprägnierungsöffnung (24) auf dem Deckel (18) oder auf dem Rohr (16), insbesondere seiner Bodenwand (16B), befindet.

## Claims

1. A method for sealing an impregnation orifice of an energy storage assembly, the assembly comprising a case (14) containing at least two electrodes, the orifice (24) being arranged in one of the walls of the case and having an outer mouth (24E) located on the outer side of the case, and an inner mouth (241) located on the inner side of the case, the method comprising :
- a step to insert in the orifice (24) via the outer mouth (24E) at least one end part of a head (2) of a tool driven in rotation in a direction (A-A') essentially corresponding to an axial direction of the orifice (24) so as to heat a zone of the case in the vicinity of the orifice, the head of the tool comprising a tip (3) with at least one first cross-section at its base and a second cross-section at its end of smaller dimensions than the first cross-section; the tip (3) being sized so that at least one cross-section of the orifice (241) is smaller than a cross-section of the tip at its base but larger than the cross-section of the tip at its end, **characterized in that**
- once the zone is heated, a step to translate the tool in the direction of the inner mouth (241) to cause displacement of material of the case, initially forming the walls of the orifice, in the direction of the inner mouth so that said material previously forming the walls of the impregnation orifice readheres to the lower part of the orifice (24) at the level of the readhesion line (30) located in the vicinity of the inner mouth (241), so as to seal the orifice (24), without the providing of additional material.

2. The method according to the preceding claim comprising a step at which the tool continues to be driven in rotation once the tool has been translated as far as a predetermined position.

3. The method according to any of the preceding claims wherein the tip (3) of the head (2) of the tool is of truncated cone shape.

4. The method according to any of the preceding claims wherein the head (2) has a peripheral shoulder (4) extending over a plane essentially perpendicular to the axis of rotation (A-A') of the tool.

5. The method according to the preceding claim wherein the impregnation orifice (24) having a cross-section of variable size, the cross-section of the head (2) at the shoulder (4) is chosen to be between the smallest and largest cross-sections of the orifice.

6. The method according to any of the preceding claims during which the head (2) is driven in rotation at a speed of between 600 and 2,000 rpm, preferably between 800 and 1,200 rpm.

7. The method according to any of the preceding claims wherein the predetermined position and/or duration of the steps are determined by means for controlling force and/or position integrated in the tool for example.

8. The method according to any of the preceding claims comprising a step at which the tool is withdrawn from the case prior to cooling and setting of the material.

9. The method according to any of the preceding claims comprising a step during which the tool is withdrawn from the case so that the head of the tool is no longer in contact with the case.

10. The method according to one of the two preceding claims wherein the tool withdrawal step is performed while rotation of the tool is continued.

11. The method according to any of the preceding claims wherein the case (14) comprises a tube (16) optionally provided with a bottom (16B) and at least one cap (18), the impregnation orifice (24) being positioned on the cap (18) or on the tube (16) in particular on its bottom wall (16B).
